# EUROPÄISCHE PATENTSCHRIFT

(11) **EP 3 311 769 B1**
(45) Veröffentlichungstag und Bekanntmachung des Hinweises auf die Patenterteilung: **11.09.2019**
(21) Anmeldenummer: 16195251.0
(22) Anmeldetag: 24.10.2016
(51) Int. Cl.: A61C 3/025, A61C 1/00, A61C 17/00

(54) **MEDIZINISCHES, INSBESONDERE ZAHNMEDIZINISCHES BEHANDLUNGSINSTRUMENT ZUR ABGABE EINES ABRASIVEN STRÖMUNGSMEDIUMS**
MEDICAL, IN PARTICULAR DENTAL TREATMENT DEVICE FOR PROVIDING AN ABRASIVE STREAMING MEDIUM
DISPOSITIF DE TRAITEMENT MÉDICAL, EN PARTICULIER DENTAIRE, POUR LA DISTRIBUTION D'UN MILIEU À FLUX ABRASIF

(43) Veröffentlichungstag der Anmeldung: 25.04.2018
(73) Patentinhaber: Kaltenbach & Voigt GmbH, 88400 Biberach (DE)
(72) Erfinder: Wiek, Hans-Dieter, 88454 Hochdorf (DE); Mohn, Uwe, 89601 Schelklingen (DE)
(74) Vertreter: Thun, Clemens

(56) Entgegenhaltungen:
- EP-A1- 2 036 513
- DE-U1- 20 205 274
- JP-A- H11 104 149
- US-A1- 2005 233 280

## Beschreibung

Die Erfindung betrifft ein medizinisches, insbesondere zahnmedizinisches Behandlungsinstrument, welches zur Abgabe eines abrasiven Strömungsmediums ausgebildet ist.

In Fig. 6 ist ein derartiges, aus der WO 03/084423 A1 bekanntes Behandlungsinstrument in Form eines so genannten Pulverstrahlgeräts skizziert, das ein Handstück 100 und einen an dem Handstück 100 angeordneten Vorratsbehälter 101 für ein abrasives, insbesondere pulverförmiges Behandlungsmittel aufweist. Weiterhin umfasst das Behandlungsinstrument eine Zuführleitung 102 für Druckluft, welche in den Vorratsbehälter 101 mündet und eine sich von dem Vorratsbehälter 101 zur einer Auslassöffnung 103 für das abrasive Strömungsmedium erstreckende Ableitung 104. Im Funktionsbetrieb strömt die Druckluft über die Zuführleitung 102 in den Vorratsbehälter 101 und vermischt sich dort mit dem abrasiven Behandlungsmittel, so dass hierdurch das abrasive Strömungsmedium gebildet wird. Im Weiteren strömt das so gebildete Gemisch, also das abrasive Strömungsmedium zu der Auslassöffnung 103. Das aus der Auslassöffnung 103 ausströmende Gemisch kann insbesondere im Rahmen einer zahnmedizinischen Behandlung zur Abtragung einer Oberflächenbeschichtung eines Zahns verwendet werden. Dabei ist die Konzentration des Behandlungsmittels in dem ausströmenden Gemisch bzw. dem abrasiven Strömungsmedium für die hierbei zu erzielende Abtragleistung entscheidend.

An demjenigen Ende der Zuführleitung 102, das sich in dem Vorratsbehälter 101 befindet, sind Anblasdüsen ausgebildet, über die die Druckluft in den Vorratsbehälter 101 einströmt. Hierdurch wird das Behandlungsmittel aufgewirbelt, so dass sich das genannte Gemisch bildet. Aufgrund der Handhabung des Handstücks im Rahmen einer Behandlung kommt es üblicherweise dazu, dass sich die Lage des Handstücks und damit auch die Lage des Vorratsbehälters 101 gegenüber der Vertikalen und somit der Einfluss der Schwerkraft verändert. Außerdem nimmt die Menge des im Vorratsbehälter 101 befindlichen Behandlungsmittels im Verlauf der Behandlung aufgrund der Ausströmung durch die Ableitung 104 ab. Dies kann dazu führen, dass die Anblasdüsen im Vorratsbehälter 101 so positioniert sind, dass die dort ausströmende Druckluft das noch im Vorratsbehälter 101 befindliche Behandlungsmittel nicht mehr oder zumindest weniger effektiv trifft und die Intensität der Aufwirbelung dementsprechend abnimmt. Als Folge hiervon nimmt die Konzentration des abrasiven Behandlungsmittels in dem aus der Auslassöffnung 103 ausströmenden Gemisch im Laufe der Behandlung ab. Dies wiederum führt zu eine Abnahme der Abtragleistung, was in aller Regel nicht erwünscht ist.

Aus der US 2005/0233280 A1 ist ein zahnmedizinisches Behandlungsinstrument zur Abgabe eines Puder-Luft-Gemisches bekannt. Das Instrument weist einen Vorratsbehälter für das Puder auf, in den über Löcher Druckluft eingeleitet wird. In dem Vorratsbehälter vermischt sich die Druckluft mit dem Puder und im Weiteren gelangt das Gemisch über eine Ableitung zu einer Auslassöffnung.

Aus der EP 2 036 513 A1 ist ein zahnmedizinisches Behandlungsinstrument zur Abgabe eines abrasiven Strömungsmediums mit einem Vorratsbehälter für ein abrasives Behandlungsmittel bekannt. In den Vorratsbehälter mündet eine Zuführleitung für Druckluft und von dem Vorratsbehälter erstreckt sich eine Ableitung zu einer Auslassöffnung. Im Endbereich der Zuführleitung wird die Druckluft über mehrere Löcher in den Vorratsbehälter abgegeben.

Der Erfindung liegt die Aufgabe zugrunde, ein entsprechendes Behandlungsinstrument zu verbessern, insbesondere mit Bezug auf die Abtragleistung.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist ein medizinisches, insbesondere zahnmedizinisches Behandlungsinstrument vorgesehen, welches zur Abgabe eines abrasiven Strömungsmediums ausgebildet ist. Das Behandlungsinstrument umfasst ein Handstück, einen an dem Handstück angeordneten Vorratsbehälter für ein abrasives Behandlungsmittel, eine Zuführleitung für Druckluft, welche in den Vorratsbehälter mündet und eine sich von dem Vorratsbehälter zu einer Auslassöffnung für das abrasive Strömungsmedium erstreckende Ableitung. Dabei sind in einem Endbereich der Zuführleitung Luftlenkmittel angeordnet, welche dazu ausgebildet sind, im Wesentlichen unabhängig von der Ausrichtung des Handstücks die Druckluft in einem unteren Bereich des Vorratsbehälters in diesen abzugeben.

Auf diese Weise lässt sich bewirken, dass die Druckluft im Laufe einer Behandlung besonders lange in engem bzw. quasi direktem Kontakt mit dem Behandlungsmittel steht und somit das Behandlungsmittel besonders lange effektiv aufgewirbelt wird. In der Folge lässt sich erzielen, dass die mit dem Behandlungsinstrument erzielbare Abtragleistung über einen besonders langen Zeitraum nicht unerwünscht abnimmt, sondern in engen Grenzen konstant bleibt.

Erfindungsgemäß weisen die Luftlenkmittel ein beweglich gelagertes Luftabgabeelement auf, welches mit der Zuführleitung gekoppelt ist. Dies ist bei hoher erzielbarer Effektivität herstellungstechnisch vorteilhaft.

Vorzugsweise ist das Luftabgabeelement als Pendel ausgeführt, welches eine oder mehrere Luftabgabeöffnungen aufweist. So lässt sich erzielen, dass das Luftabgabeelement einfach und doch effektiv bei einer Lageänderung des Handstücks gegenüber der Vertikalen jeweils seine tiefste mögliche Lage einnimmt und so die Wahrscheinlichkeit, dass es in das Behandlungsmittel eintaucht besonders groß ist.

Vorzugsweise weist das Luftabgabeelement in etwa eine Zylindersektor-artige Form auf. Dies ist weiterhin vorteilhaft mit Bezug auf die Eintauchwahrscheinlichkeit des Luftabgabeelements in das Behandlungsmittel, insbesondere, wenn der Vorratsbehälter einen zylinderförmigen Innenraum aufweist, in dem sich das Behandlungsmittel befindet.

Vorzugsweise sind mehrere Luftabgabeöffnungen an zwei einander gegenüberliegenden Flachseiten des Luftabgabeelements in der Nähe der Umfangsfläche ausgebildet. So lässt sich bewirken, dass die Druckluft effektiv an unterschiedlichen Stellen in das Behandlungsmittel eingeblasen wird.

Alternativ umfassen die Luftlenkmittel erfindungsgemäß zumindest zwei Luftabgabeleitungen, welche in unterschiedlichen Bereichen in den Vorratsbehälter münden, wobei ferner eine Ventilanordnung vorgesehen ist, welche die Zuführleitung abhängig von der Ausrichtung des Handstücks mit einer der Luftabgabeleitungen verbindet. So lässt sich erzielen, dass unabhängig von der Ausrichtung des Handstücks eine der Luftabgabeleitungen mit hoher Wahrscheinlichkeit in das Behandlungsmittel eintaucht.

Vorzugsweise weist die Ventilanordnung einen mit der Zuführleitung gekoppelten Verteilerkanal auf, der mit den Luftabgabeleitungen gekoppelt ist, wobei in dem Verteilerkanal ein Ventilelement angeordnet ist. So lässt sich auf einfache Weise erzielen, dass die Druckluft in eine der Luftabgabeleitungen einströmt.

Vorzugsweise ist der Verteilerkanal gekrümmt ausgeführt, wobei es sich bei dem Ventilelement um eine in dem Verteilerkanal beweglich gelagerte Kugel oder eine Rolle oder ein Rollelement handelt. So lässt sich ein besonders geeigneter Verschließmechanismus der Verteileranordnung realisieren.

Die Erfindung wird im Folgenden anhand von Ausführungsbeispielen und mit Bezug auf die Zeichnungen näher erläutert. Es zeigen:
Fig. 1 eine schematische Skizze eines Längsschnitts durch einen Vorratsbehälter eines erfindungsgemäßen Behandlungsinstruments gemäß einer ersten Ausführungsform,
Fig. 2 eine schematische Skizze eines Querschnitts durch einen Endbereich des Vorratsbehälters,
Fig. 3 eine schematische Skizze zu einer zweiten Ausführungsform eines erfindungsgemäßen Behandlungsinstruments bei einer ersten geneigten Ausrichtung einer Längsachse des Vorratsbehälters gegenüber der Vertikalen,
Fig. 4 eine, der Fig. 3 entsprechendes Skizze bei einer horizontalen Ausrichtung des Vorratsbehälters,
Fig. 5 eine, der Fig. 3 entsprechendes Skizze bei einer zweiten geneigten Ausrichtung einer Längsachse des Vorratsbehälters gegenüber der Vertikalen und
Fig. 6 eine Skizze eines Behandlungsinstruments gemäß dem Stand der Technik.

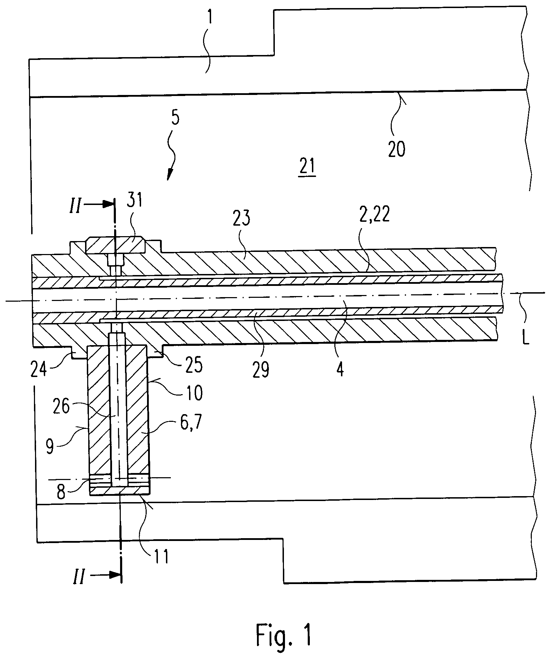

Fig. 1 zeigt eine schematische Skizze eines Längsschnitts durch einen Vorratsbehälter 1 eines anmeldungsgemäßen Behandlungsinstruments. Bei dem Behandlungsinstrument kann es sich insbesondere um ein zahnmedizinisches Behandlungsinstrument handeln. Das Behandlungsinstrument ist zur Abgabe eines abrasiven Strömungsmediums ausgebildet. Der Vorratsbehälter 1 dient zur Aufnahme eines abrasiven Behandlungsmittels, insbesondere in Form eines Pulvers.

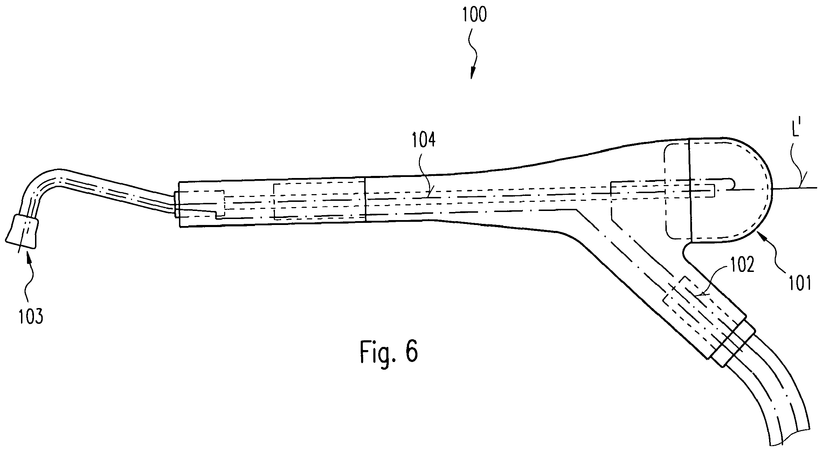

Soweit hier nicht anders beschrieben, kann der Aufbau des Behandlungsinstruments analog zu dem Aufbau des in Fig. 6 skizzierten und eingangs beschriebenen Behandlungsinstrument gestaltet sein. Das Behandlungsinstrument umfasst ein Handstück, insbesondere entsprechend dem in Fig. 6 skizzierten Handstück 100, wobei der Vorratsbehälter 1 an dem Handstück angeordnet ist. Dabei ist der Vorratsbehälter 1 vorzugsweise derart mit dem Handstück verbunden, dass bei einer Bewegung des Handstücks der Vorratsbehälter 1 entsprechend gleichartig mitbewegt wird.

Das Handstück ist vorzugsweise länglich, so dass es sich entlang einer Längsachse L' erstreckt. Weiterhin umfasst das Behandlungsinstrument eine Zuführleitung 2 für Druckluft, welche in den Vorratsbehälter 1 mündet. Außerdem umfasst das Behandlungsinstrument eine, sich von dem Vorratsbehälter 1 zu einer Auslassöffnung, insbesondere entsprechend der in Fig. 6 skizzierten Auslassöffnung 103, für das abrasive Strömungsmedium erstreckende Ableitung 4.

Der Vorratsbehälter 1 kann einen insbesondere kreiszylindrischen Innenwandbereich 20 aufweisen, durch den ein Innenraum 21 des Vorrastbehälters 1 begrenzt ist, der dazu ausgestaltet ist, das abrasive Behandlungsmittel aufzunehmen.

Der Innenwandbereich 21 kann sich symmetrisch zu einer Längsachse L erstrecken, wobei der Vorratsbehälter 1 länglich geformt sein kann, so dass er sich ebenfalls entlang der Längsachse L erstreckt. Die Längsachse L ist vorzugsweise parallel zu der oben erwähnten, durch die Form des Handstücks festgelegten Längsachse L' orientiert. Insbesondere kann der Vorratsbehälter 1 derart an dem Handstück angeordnet sein, dass bei einer Bewegung des Handstücks die Längsachse L relativ zu der Längsachse L' des Handstücks stets gleich orientiert bleibt.

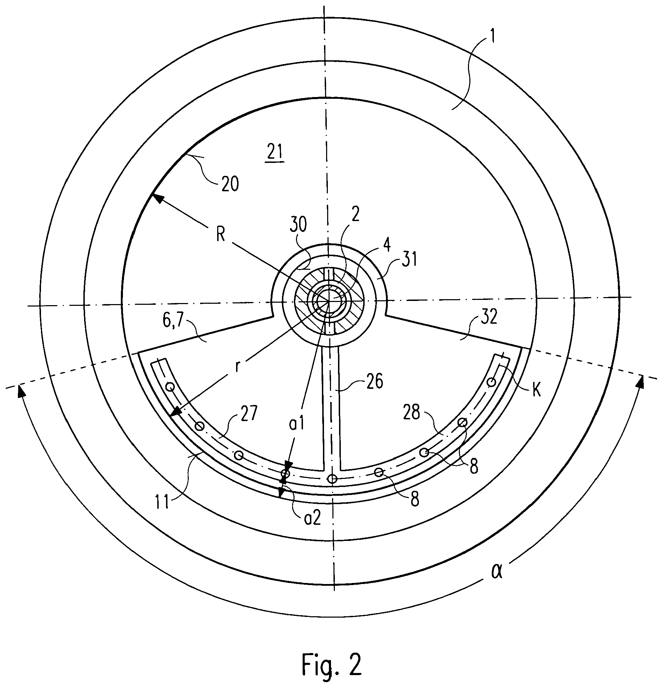

In Fig. 2 ist eine schematische Querschnittskizze durch den Vorratsbehälter 1 gezeigt, wobei der Querschnitt normal zu der Längsachse L auf Höhe der in Fig. 1 mit II - II skizzierten Schnittlinie gelegt ist.

Die Zuführleitung 2 weist einen Endbereich 5 auf, der sich beim hier gezeigten ersten Ausführungsbeispiel innerhalb des Vorratsbehälters 1 erstreckt. Nunmehr im Unterschied zu dem eingangs beschriebenen Behandlungsinstrument sind in diesem Endbereich 5 der Zuführleitung 2 Luftlenkmittel 6 angeordnet, die dazu ausgebildet sind, im Wesentlichen unabhängig von der Ausrichtung des Handstücks die Druckluft in einem unteren Bereich des Vorratsbehälters 1 in diesen abzugeben. Wenn sich das Behandlungsmittel in dem Vorratsbehälter 1 befindet, wird dieses durch diese Druckluftabgabe aufgewirbelt, so dass es sich mit der Luft vermischt; auf diese Weise wird das abrasive Strömungsmedium gebildet. In der Folge strömt das Strömungsmedium aus dem Vorratsbehälter 1 bzw. dessen Innenraum 21 in die Ableitung 4, strömt durch diese hindurch und verlässt schließlich über die Auslassöffnung das Behandlungsinstrument.

Bei dem anhand der Figuren 1 und 2 gezeigten ersten Ausführungsbeispiel weisen die Luftlenkmittel 6 ein beweglich gelagertes Luftabgabeelement 7 auf, das mit der Zuführleitung 2 gekoppelt ist bzw. durch das ein Mündungsbereich der Zuführleitung 2 in den Vorratsbehälter 1 gebildet ist. Vorzugsweise ist das Luftabgabeelement 7 als ein Pendel ausgeführt. Hierzu kann vorteilhaft zur Bildung einer äußeren Begrenzung der Zuführleitung 2 ein, sich in dem Vorratsbehälter 1 entlang der Längsachse L erstreckendes Rohr 23 angeordnet sein. Dabei ist das Luftabgabeelement 7 vorzugsweise an dem Rohr 23 um die Längsachse L drehbar gelagert, so dass das Rohr 23 in diesem Sinne eine Achse darstellt. Wie aus Fig. 2 hervorgeht, kann hierzu das Luftabgabeelement 7 eine kreisförmige Öffnung 30 aufweisen, mit der es das Rohr 23 mit einem Bewegungsspiel umgibt, durch das eine Pendelbewegung des Luftabgabeelements 7 ermöglicht ist.

Vorzugsweise ist die Gestaltung dabei derart, dass eine Pendelbewegung des Luftabgabeelements 7 um 360° möglich ist.

Wie aus Fig. 1 ersichtlich, sind an dem Rohr 23 vorzugsweise zwei radial nach außen weisende Begrenzungselemente 24, 25 ausgebildet, durch die eine Bewegung des Luftabgabeelements 7 entlang der Längsachse L beidseits begrenzt ist. Hierdurch lässt sich erzielen, dass sich das Luftabgabeelement 7 - entlang der Längsachse L betrachtet - stets in einem bestimmten gewünschten Bereich befindet.

Das Luftabgabeelement 7 bzw. das Pendel weist vorzugsweise wenigstens eine Luftabgabeöffnung 8 auf, wobei die Gestaltung derart ist, dass die durch die Zuführleitung 2 geleitete Druckluft über die wenigstens eine Luftabgabeöffnung 8 in den Innenraum 21 des Vorratsbehälters 1 strömen kann. Im gezeigten Beispiel ist in dem Luftabgabeelement 7 ein Leitungsabschnitt 26 ausgebildet, der sich mit Bezug auf die Längsachse L radial erstreckt, wobei der Leitungsabschnitt 26 die Druckluft leitend einerseits mit dem Rohr 23 bzw. der von Letzterem begrenzten Zuführleitung 2 verbunden ist und andererseits über die wenigstens eine Luftabgabeöffnung 8 in den Innenraum 21 des Vorratsbehälters 1 mündet.

Durch diese Gestaltung lässt sich erzielen, dass das Luftabgabeelement 7 bzw. das Pendel bei einer Veränderung der Lage des Vorratsbehälters 1 gegenüber der Vertikalen sozusagen das Behandlungsmittel bzw. das Pulver "verfolgt". Schwerkraftbedingt bewegt es sich stets nach unten - ebenso wie das Behandlungsmittel bzw. das Pulver innerhalb des Vorratsbehälters 1. Das Material des Luftabgabeelements 7 ist hierzu dementsprechend geeignet gewählt. So lässt sich erzielen, dass sich die wenigstens eine Luftabgabeöffnung 8 stets innerhalb des Behandlungsmittels bzw. des Pulvers befindet oder doch zumindest möglichst nahe an diesem; auf diese Weise lässt sich eine besonders effektive Aufwirbelung des Behandlungsmittels bzw. des Pulvers bewirken. Als Folge hiervon lässt sich erzielen, dass die Konzentration des Behandlungsmittels bzw. des Pulvers in dem abrasiven Strömungsmedium im Laufe einer Behandlung besonders wenig schwankt und damit die mit dem Behandlungsinstrument zu erzielende Abtragleistung in engen Grenzen konstant bleibt.

Wie aus Fig. 2 ersichtlich, kann das Luftabgabeelement 7 in etwa eine Zylindersektor-artige Form aufweisen, wobei insbesondere durch die Längsachse L eine entsprechende Zylinder-Mittelachse festgelegt ist. Beispielsweise kann vorgesehen sein, dass das Luftabgabeelement 7 einen ringförmigen Lagerbereich 31 aufweist, durch den die oben genannten kreisförmige Öffnung 30 gebildet ist, sowie einen sich hieran anschließenden Hauptbereich 32, der normal zu der Längsachse L betrachtet einen entsprechenden Zylindersektor, insbesondere Kreiszylindersektor umschreibt. Dabei ist der Sektor vorzugsweise durch einen Winkel α begrenzt, der beispielsweise zwischen 40° und 270°, vorzugsweise zwischen 90° und 180°, beispielsweise zwischen 130° und 180° beträgt.

Im gezeigten Beispiel weist das Luftlenkelement 7 mehrere Luftabgabeöffnungen 8 auf, die sich in einem radial äußeren Bereich des Luftlenkelements 7 befinden; beispielsweise können - wie gezeigt - die Luftabgabeöffnungen 8 sich auf einer um die Längsachse L erstreckenden Kreislinie K befindend ausgebildet sein. Dabei ist die Gestaltung vorzugsweise derart, dass sich die Luftabgabeöffnungen 8 verhältnismäßig nahe an dem Innenwandbereich 20 des Vorratsbehälters 1 befinden, weil hierdurch ein besonders zuverlässiges Eingreifen der Luftabgabeöffnungen 8 in das Behandlungsmedium bzw. das Pulver ermöglicht ist und somit ein besonders effektives Aufwirbeln.

Beispielsweise kann die Gestaltung derart sein, dass sich für das Verhältnis des Abstands a2 der wenigstens einen Luftabgabeöffnung 8 von dem Innenwandbereich 20 des Vorratsbehälters 1 zu dem Abstand a1 der wenigstens einen Luftabgabeöffnung 8 von der Längsachse L Folgendes gilt: a2/a1 < 0,3, vorzugsweise a2/a1 < 0,2.

Die mit Bezug auf die Längsachse L radiale Erstreckung r des Luftabgabeelements 7 beträgt vorzugsweise wenigstens 80%, insbesondere wenigstens 90% der radialen Erstreckung R des Innenraums 21 des Vorrastbehälters 1, die durch den kreiszylindrischen Innenwandbereich 20 gegeben ist.

Beim gezeigten Beispiel erstreckt sich der in dem Luftabgabeelement 7 gebildete Leitungsabschnitt 26 - normal zu der Längsachse L betrachtet - länglich radial in einem mittleren Bereich des Luftabgabeelements 7 und zwar bis zu der Kreislinie K, verzweigt sich dort auf beide Seiten und bildet schließlich so zwei Leitungsarme 27, 28 entlang der Kreislinie K. Diese Leitungsarme 27, 28 stehen insbesondere unmittelbar mit zylindrischen Öffnungen in Verbindung, durch die die Luftabgabeöffnungen 8 gebildet sind. Die zylindrischen Öffnungen können sich dabei parallel zur Längsachse L erstrecken. Beispielsweise kann die Gestaltung derart sein, dass die Anzahl der Luftabgabeöffnungen 8 auf jeder Seite der Verzweigung jeweils wenigstens zwei beträgt, vorzugsweise wenigstens drei.

Wie aus Fig. 2 ersichtlich kann das Luftabgabeelement 7 derart gestaltet sein, dass es zwei einander gegenüberliegende Flachseiten 9, 10 aufweist, die insbesondere normal zu der Längsachse L orientiert sein können, sowie eine Umfangsfläche 11, insbesondere in Form eines Teilbereichs einer Kreiszylinderfläche. Die Umfangsfläche 11 verbindet hierbei vorzugsweise die beiden genannten Flachseiten 9, 10 unmittelbar. Im gezeigten Beispiel weist das Luftabgabeelement 7 mehrere Luftabgabeöffnungen 8 auf, wobei diese an den beiden genannten Flachseiten 9, 10 ausgebildet sind, und zwar in der Nähe der Umfangsfläche 11. Hierzu können die oben genannten zylindrischen Öffnungen derart gestaltet sein, dass sie das Luftabgabeelement 7 - beispielsweise parallel zur Längsachse L - vollständig durchsetzen.

Die Erstreckung des Luftabgabeelements 7 parallel zu der Längsachse L betrachtet ist vorzugsweise kleiner als seine radiale Erstreckung r, vorzugsweise kleiner als die Hälfte seiner radialen Erstreckung r.

Die Ableitung 4 ist vorzugsweise durch ein weiteres Rohr 29 gebildet, das insbesondere konzentrisch in dem zuerst genannten Rohr 23 angeordnet ist, so dass sich die Zuführleitung 2 in einem zwischen den beiden genannten Rohren 23, 29 erstreckenden kreiszylindrischen Hohlraum erstreckt und die Ableitung innerhalb des weiteren Rohrs 4. Dabei kann das weitere Rohr 29 unmittelbar in den Innenraum 21 des Vorratsbehälters 1 münden.

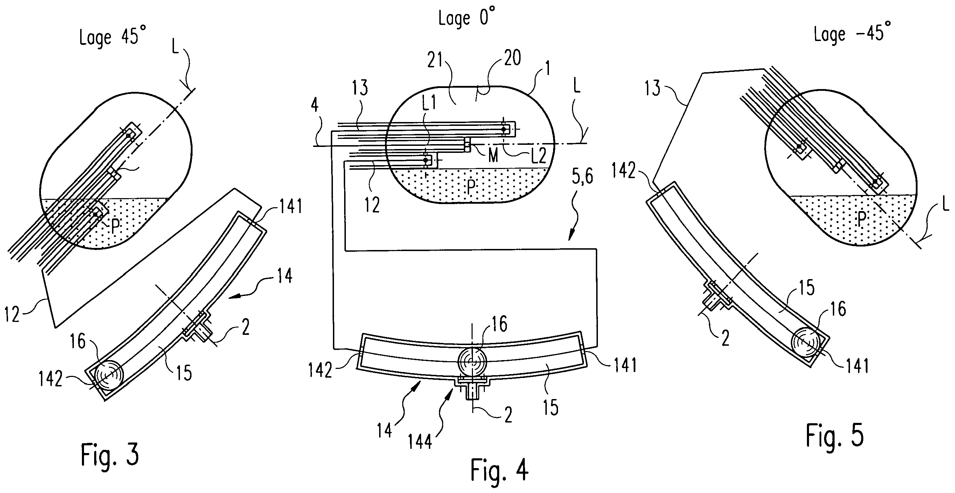

Die Figuren 3 bis 5 zeigen Skizzen zu einem zweiten Ausführungsbeispiel. Soweit nicht anders angegeben, sind die Bezugszeichen analog zu oben gebraucht.

Bei diesem Ausführungsbeispiel umfassen die im Endbereich 5 der Zuführleitung 2 angeordneten Luftlenkmittel 6 zumindest zwei Luftabgabeleitungen 12, 13, welche in unterschiedlichen Bereichen in den Vorratsbehälter 1 münden. Außerdem ist eine Ventilanordnung 14 vorgesehen, welche die Zuführleitung 2 abhängig von der Ausrichtung des Handstücks mit einer der Luftabgabeleitungen 12, 13 verbindet. Die Ventilanordnung 14 ist dabei vorzugsweise lagefest mit dem Handstück verbunden.

Wie in Fig. 4 im Längsschnitt skizziert, kann auch bei diesem Ausführungsbeispiel der Vorratsbehälter 1 den insbesondere kreiszylindrischen Innenwandbereich 20 aufweisen, durch den eine Begrenzung des Innenraums 21 des Vorrastbehälters 1 gebildet ist. Auch hier ist der Innenraum 21 zur Aufnahme des Behandlungsmittels vorgesehen; das abrasive Behandlungsmittel ist hier in Form eines Pulvers P skizziert.

Der Vorratsbehälter 1 kann sich wiederum entlang einer Längsachse L erstrecken, die beispielsweise wiederum parallel zu einer Längsachse des Handstücks orientiert ist. Ein Mittelpunkt M des Innenraums 21 liegt dabei auf der Längsachse L.

In der in Fig. 4 gezeigten Lage ist die Längsachse L des Vorratsbehälters 1 horizontal orientiert. In Fig. 3 ist ein Zustand gezeigt, in dem die Längsachse L des Vorratsbehälters 1 in einer vertikalen Ebene - hier der Zeichenebene - betrachtet um 45° geneigt ist. Diese Position wird eingenommen, wenn das Handstück entsprechend gedreht wird, da der Vorratsbehälter 1 insbesondere lagefest mit dem Handstück verbunden ist. In Fig. 5 ist ein weiterer Zustand gezeigt, in dem die Längsachse L des Vorratsbehälters 1 in der vertikalen Ebene betrachtet um - 45° geneigt ist. Man erkennt, dass sich das Pulver P jeweils schwerkraftbedingt in einen unteren Bereich des Innenraums 21 des Vorratsbehälters 1 verlagert.

Die zwei Luftabgabeleitungen 12, 13 münden im gezeigten Beispiel in zwei unterschiedlichen Bereichen in den Vorratsbehälter 1, die sich mit Bezug auf die Längsachse L an zwei unterschiedlichen Längspositionen L1, L2 befinden, die nicht mit dem Mittelpunkt M identisch sind und die sich vorzugsweise gleichweit von dem Mittelpunkt M entfernt befinden. Dabei ist die Gestaltung vorzugsweise derart, dass sich die Längspositionen L1, L2 jeweils mindestens in einem Abstand von dem Mittelpunkt M befinden, der größer ist als 15%, vorzugsweise größer als 20% der Erstreckung des Innenraums 21 entlang der Längsachse L.

Die Gestaltung ist insbesondere derart, dass die Ventilanordnung 14 - wie in Fig. 3 qualitativ skizziert - in einer ersten geneigten Lageposition gegenüber der Vertikalen die Zuführleitung 2 die Druckluft leitend mit einer ersten der Luftabgabeleitungen 12, 13 - hier der Luftabgabeleitung 12 - verbindet, nicht jedoch mit einer zweiten der Luftabgabeleitungen 12, 13 - hier der Luftabgabeleitung 13 und - wie in Fig. 5 qualitativ skizziert - in einer zweiten anders geneigten Lageposition die Zuführleitung 2 die Druckluft leitend mit der zweiten Luftabgabeleitung 13 verbindet, nicht jedoch mit der ersten Luftabgabeleitung 12.

Wie erwähnt, ist die Verteileranordnung 14 so wie auch der Vorratsbehälter 1 insbesondere lagefest mit dem Handstück verbunden, so dass sie sich - ebenso wie der Vorratsbehälter 1 - bei einer Bewegung des Handstücks mitbewegt. Vorzugsweise weist die Ventilanordnung 14 einen mit der Zuführleitung 2 für die Druckluft gekoppelten Verteilerkanal 15 auf, wobei in dem Verteilerkanal 15 ein Ventilelement 16 angeordnet ist. Der Verteilerkanal 15 kann einen Einlass 144 für die Zuführleitung 2 aufweisen, sowie einen ersten Auslass 141 und einen zweiten Auslass 142. Der Einlass 144 befindet sich vorzugsweise in einem mittleren Bereich des Verteilerkanals 15 und die beiden Auslässe 141, 142 befinden sich vorzugsweise an zwei gegenüber liegenden Endbereichen des Verteilerkanals 15. Dabei ist die erste Luftabgabeleitung 12 mit dem ersten Auslass 141 verbunden und die zweite Luftabgabeleitung 13 mit dem zweiten Auslass 142. Durch das Ventilelement 16 ist dabei in der ersten geneigten Lageposition - wie in Fig. 3 skizziert - der zweite Auslass 142 verschlossen, der erste Auslass 141 jedoch frei, so dass die durch die Zuführleitung 2 in den Verteilerkanal 15 einströmende Luft im Weiteren in die erste Luftabgabeleitung 12 einströmt, nicht jedoch in die zweite Luftabgabeleitung 13. In der in Fig. 5 skizzierten, zweiten geneigten Lageposition verhält es sich entsprechend andersherum, so dass hier die Luft im Weiteren in die zweite Luftabgabeleitung 13 einströmt, nicht jedoch in die erste Luftabgabeleitung 12.

Dabei ist der Verteilerkanal 15 vorzugsweise derart an dem Handstück angeordnet, dass er zumindest in erster Näherung mit seiner Längserstreckung parallel zur Längsachse L des Vorratsbehälters ausgerichtet ist. Dabei ist die Gestaltung derart, dass in einer gegenüber der Vertikalen geneigten Lage derjenige der beiden Auslässe, 141, 142, der sich auf einem höheren Niveau befindet, mit derjenigen der beiden Luftabgabeleitungen 12, 13 verbunden ist, deren Mündung sich im Vorratsbehälter 1 auf dem tieferen Niveau befindet. So lässt sich die Wahrscheinlichkeit, dass die in den Vorratsbehälter 1 einströmende Druckluft effektiv in das Pulver P geblasen wird, erhöhen.

Vorzugsweise ist der Verteilerkanal 15 gekrümmt ausgeführt, wobei es sich bei dem Ventilelement 16 um eine in dem Verteilerkanal 15 beweglich gelagerte Kugel oder eine Rolle oder ein Rollelement handelt. Dies ist herstellungstechnisch vorteilhaft. Der Verteilerkanal 15 kann dabei rohrartig gestaltet sein, so dass sich das Ventilelement 16 bzw. die Kugel innerhalb des Verteilerkanals 15 frei bewegen kann. Je nach Haltung bzw. Neigung des Handstücks rollt dann die Kugel zu dem einen oder dem anderen Ende des Verteilerkanals 15 und verschließt denjenigen der beiden Auslässe 141, 142, der sich gerade dort befindet.

## Patentansprüche

1. Medizinisches, insbesondere zahnmedizinisches Behandlungsinstrument, welches zur Abgabe eines abrasiven Strömungsmediums ausgebildet ist, mit
• einem Handstück,
• einem an dem Handstück angeordneten Vorratsbehälter (1) für ein abrasives Behandlungsmittel,
• einer Zuführleitung (2) für Druckluft, welche in den Vorratsbehälter (1) mündet, und
• einer sich von dem Vorratsbehälter (1) zu einer Auslassöffnung für das abrasive Strömungsmedium erstreckenden Ableitung (4),
wobei im Endbereich (5) der Zuführleitung (2) Luftlenkmittel (6) angeordnet sind, welche dazu ausgebildet sind, im Wesentlichen unabhängig von der Ausrichtung des Handstücks die Druckluft in einem unteren Bereich des Vorratsbehälters (1) in diesen abzugeben,
**dadurch gekennzeichnet,**
**dass** die Luftlenkmittel (6) ein beweglich gelagertes Luftabgabeelement (7) aufweisen, welches mit der Zuführleitung (2) gekoppelt ist.

2. Medizinisches Behandlungsinstrument nach Anspruch 1,
**dadurch gekennzeichnet,**
**dass** das Luftabgabeelement (7) als Pendel ausgeführt ist, welches eine oder mehrere Luftabgabeöffnungen (8) aufweist.

3. Medizinisches Behandlungsinstrument nach Anspruch 2,
**dadurch gekennzeichnet,**
**dass** die Gestaltung dabei derart ist, dass eine Pendelbewegung des Luftabgabeelements (7) um 360° möglich ist.

4. Medizinisches Behandlungsinstrument nach Anspruch 2 oder 3,
**dadurch gekennzeichnet,**
**dass** das Luftabgabeelement (7) in etwa eine zylindersektor-artige Form aufweist.

5. Medizinisches Behandlungsinstrument nach Anspruch 2 und Anspruch 4,
**dadurch gekennzeichnet,**
**dass** mehrere Luftabgabeöffnungen (8) an zwei einander gegenüberliegenden Flachseiten (9, 10) des Luftabgabeelements (7) in der Nähe der Umfangsfläche (11) ausgebildet sind.

6. Medizinisches, insbesondere zahnmedizinisches Behandlungsinstrument, welches zur Abgabe eines abrasiven Strömungsmediums ausgebildet ist, mit
• einem Handstück,
• einem an dem Handstück angeordneten Vorratsbehälter (1) für ein abrasives Behandlungsmittel,
• einer Zuführleitung (2) für Druckluft, welche in den Vorratsbehälter (1) mündet, und
• einer sich von dem Vorratsbehälter (1) zu einer Auslassöffnung für das abrasive Strömungsmedium erstreckenden Ableitung (4),
wobei im Endbereich (5) der Zuführleitung (2) Luftlenkmittel (6) angeordnet sind, welche dazu ausgebildet sind, im Wesentlichen unabhängig von der Ausrichtung des Handstücks die Druckluft in einem unteren Bereich des Vorratsbehälters (1) in diesen abzugeben,
wobei die Luftlenkmittel (6) zumindest zwei Luftabgabeleitungen (12, 13) umfassen, welche in unterschiedlichen Bereichen in den Vorratsbehälter (1) münden,
**dadurch gekennzeichnet,**
**dass** ferner eine Ventilanordnung (14) vorgesehen ist, welche die Zuführleitung (2) abhängig von der Ausrichtung des Handstücks mit einer der Luftabgabeleitungen (12, 13) verbindet.

7. Medizinisches Behandlungsinstrument nach Anspruch 6,
**dadurch gekennzeichnet,**
**dass** die Ventilanordnung (14) lagefest mit dem Handstück verbunden ist.

8. Medizinisches Behandlungsinstrument nach Anspruch 6 oder 7,
**dadurch gekennzeichnet,**
**dass** sich der Vorratsbehälter (1) entlang einer Längsachse (L) erstreckt, die beispielsweise parallel zu einer Längsachse des Handstücks orientiert ist, wobei der Vorratsbehälter (1) einen insbesondere kreiszylindrischen Innenwandbereich (20) aufweist, durch den eine Begrenzung eines Innenraums (21) des Vorratsbehälters (1) zur Aufnahme des Behandlungsmittels gebildet ist, wobei ein Mittelpunkt (M) des Innenraums (21) auf der Längsachse (L) liegt.

9. Medizinisches Behandlungsinstrument nach Anspruch 8,
**dadurch gekennzeichnet,**
**dass** die zwei Luftabgabeleitungen (12, 13) in zwei unterschiedlichen Bereichen in den Vorratsbehälter (1) münden, die sich mit Bezug auf die Längsachse (L) an zwei unterschiedlichen Längspositionen (L1, L2) befinden, die nicht mit dem Mittelpunkt (M) identisch sind.

10. Medizinisches Behandlungsinstrument nach einem der Ansprüche 6 bis 9,
**dadurch gekennzeichnet,**
**dass** die Ventilanordnung (14) einen mit der Zuführleitung (2) gekoppelten Verteilerkanal (15) aufweist, der mit den Luftabgabeleitungen (12, 13) gekoppelt ist, wobei in dem Verteilerkanal (15) ein Ventilelement (16) angeordnet ist.

11. Medizinisches Behandlungsinstrument nach Anspruch 10 in seiner Rückbeziehung auf den Anspruch 8,
**dadurch gekennzeichnet,**
**dass** der Verteilerkanal (15) derart an dem Handstück angeordnet ist, dass er zumindest in erster Näherung mit seiner Längserstreckung parallel zur Längsachse (L) des Vorratsbehälters (1) ausgerichtet ist.

12. Medizinisches Behandlungsinstrument nach Anspruch 10 oder 11,
**dadurch gekennzeichnet,**
**dass** der Verteilerkanal (15) einen Einlass (144) für die Zuführleitung (2) aufweist, sowie einen ersten Auslass (141), der mit einer ersten Luftabgabeleitung (12) der zwei Luftabgabeleitungen (12, 13) verbunden ist und einen zweiten Auslass (142), der mit einer zweiten Luftabgabeleitung (13) der zwei Luftabgabeleitungen (12, 13) verbunden ist.

13. Medizinisches Behandlungsinstrument nach Anspruch 12,
**dadurch gekennzeichnet**
**dass** sich der Einlass (144) in einem mittleren Bereich des Verteilerkanals (15) befindet und die beiden Auslässe (141, 142) an zwei gegenüber liegenden Endbereichen des Verteilerkanals (15).

14. Medizinisches Behandlungsinstrument nach einem der Ansprüche 10 bis 13,
**dadurch gekennzeichnet,**
**dass** der Verteilerkanal (15) gekrümmt ausgeführt ist und es sich bei dem Ventilelement (16) um eine in dem Verteilerkanal beweglich gelagerte Kugel oder eine Rolle oder ein Rollelement handelt.

15. Medizinisches Behandlungsinstrument nach Anspruch 14,
**dadurch gekennzeichnet,**
**dass** der Verteilerkanal (15) rohrartig gestaltet ist, so dass sich das Ventilelement (16) innerhalb des Verteilerkanals (15) frei bewegen kann.

## Claims

1. Medical, in particular dental treatment instrument, which is configured to output an abrasive flow medium, having
- a handpiece,
- a storage container (1), arranged on the handpiece, for an abrasive treatment medium,
- a feed line (2) for compressed air, which leads into the storage container (1), and
- a discharge line (4) extending from the storage container (1) to an outlet opening for the abrasive flow medium,
wherein air deflection means (6) are arranged in the end region (5) of the feed line (2), said air deflection means (6) being configured to output the compressed air into the storage container (1) in a bottom region of the latter substantially independently of the orientation of the handpiece,
**characterized**
**in that** the air deflection means (6) have a movably mounted air output element (7), which is coupled to the feed line (2).

2. Medical treatment instrument according to Claim 1,
**characterized**
**in that** the air output element (7) is embodied as a pendulum, which has one or more air output openings (8).

3. Medical treatment instrument according to Claim 2,
**characterized**
**in that** the design is such that a reciprocating movement of the air output element (7) through 360° is possible.

4. Medical treatment instrument according to Claim 2 or 3,
**characterized**
**in that** the air output element (7) has an approximately cylinder-sector-like shape.

5. Medical treatment instrument according to Claim 2 and Claim 4,
**characterized**
**in that** a plurality of air output openings (8) are formed on two mutually opposite flat sides (9, 10) of the air output element (7) in the vicinity of the circumferential surface (11).

6. Medical, in particular dental treatment instrument, which is configured to output an abrasive flow medium, having
- a handpiece,
- a storage container (1), arranged on the handpiece, for an abrasive treatment medium,
- a feed line (2) for compressed air, which leads into the storage container (1), and
- a discharge line (4) extending from the storage container (1) to an outlet opening for the abrasive flow medium,
wherein air deflection means (6) are arranged in the end region (5) of the feed line (2), said air deflection means (6) being configured to output the compressed air into the storage container (1) in a bottom region of the latter substantially independently of the orientation of the handpiece,
wherein the air deflection means (6) comprise at least two air output lines (12, 13) that lead into the storage container (1) in different regions,
**characterized**
**in that** a valve arrangement (14) is also provided, which connects the feed line (2) to one of the air output lines (12, 13) depending on the orientation of the handpiece.

7. Medical treatment instrument according to Claim 6,
**characterized**
**in that** the valve arrangement (14) is connected to the handpiece in a fixed position.

8. Medical treatment instrument according to Claim 6 or 7,
**characterized**
**in that** the storage container (1) extends along a longitudinal axis (L) that is oriented for example parallel to a longitudinal axis of the handpiece, wherein the storage container (1) has an in particular circular cylindrical inner wall region (20) that forms a boundary of an interior space (21) of the storage container (1) for receiving the treatment medium, wherein a central point (M) of the interior space (21) lies on the longitudinal axis (L).

9. Medical treatment instrument according to Claim 8,
**characterized**
**in that** the two air output lines (12, 13) lead into the storage container (1) in two different regions that are located at two different longitudinal positions (L1, L2) with respect to the longitudinal axis (L) that are not identical to the central point (M).

10. Medical treatment instrument according to one of Claims 6 to 9,
**characterized**
**in that** the valve arrangement (14) has a distributor duct (15) coupled to the feed line (2), said distributor duct (15) being coupled to the air output lines (12, 13), wherein a valve element (16) is arranged in the distributor duct (15).

11. Medical treatment instrument according to Claim 10 when the latter refers back to Claim 8,
**characterized**
**in that** the distributor duct (15) is arranged on the handpiece such that it is oriented at least in a first approximation with its longitudinal extension parallel to the longitudinal axis (L) of the storage container (1) .

12. Medical treatment instrument according to Claim 10 or 11,
**characterized**
**in that** the distributor duct (15) has an inlet (144) for the feed line (2), and a first outlet (141), which is connected to a first air output line (12) of the two air output lines (12, 13), and a second outlet (142), which is connected to a second air output line (13) of the two air output lines (12, 13).

13. Medical treatment instrument according to Claim 12,
**characterized**
**in that** the inlet (144) is located in a central region of the distributor duct (15), and the two outlets (141, 142) are located at two opposite end regions of the distributor duct (15).

14. Medical treatment instrument according to one of Claims 10 to 13,
**characterized**
**in that** the distributor duct (15) is embodied as a curved manner and the valve element (16) is a ball mounted in a movable manner in the distributor duct, or a roller or a rolling element.

15. Medical treatment instrument according to Claim 14,
**characterized**
**in that** the distributor duct (15) is designed in a tubular manner such that the valve element (16) can move freely within the distributor duct (15).

## Revendications

1. Instrument de traitement médical, en particulier dentaire, lequel est conçu pour distribuer un milieu d'écoulement abrasif, avec
- une pièce à main,
- un réservoir de stockage (1) pour un agent de traitement abrasif disposé au niveau de la pièce à main,
- une conduite d'amenée (2) pour de l'air comprimé, laquelle débouche dans le réservoir de stockage (1), et
- une conduite d'évacuation (4) s'étendant du réservoir de stockage (1) à un orifice de sortie pour le milieu d'écoulement abrasif,
dans lequel des moyens de guidage d'air (6) sont disposés dans la zone d'extrémité (5) de la conduite d'amenée (2), lesquels sont conçus pour distribuer l'air comprimé dans une zone inférieure du réservoir de stockage (1) dans celui-ci sensiblement indépendamment de l'orientation de la pièce à main,
**caractérisé en ce**
**que** les moyens de guidage d'air (6) présentent un élément de distribution d'air (7) monté mobile, lequel est accouplé à la conduite d'amenée (2).

2. Instrument de traitement médical selon la revendication 1,
**caractérisé en ce**
**que** l'élément de distribution d'air (7) est réalisé sous la forme d'un pendule, lequel présente un ou plusieurs orifices de distribution d'air (8).

3. Instrument de traitement médical selon la revendication 2,
**caractérisé en ce**
**que** la conception est telle qu'un mouvement pendulaire de l'élément de distribution d'air (7) de 360° est possible.

4. Instrument de traitement médical selon la revendication 2 ou 3,
**caractérisé en ce**
**que** l'élément de distribution d'air (7) présente à peu près une forme de type secteur de cylindre.

5. Instrument de traitement médical selon la revendication 2 et la revendication 4,
**caractérisé en ce**
**que** plusieurs orifices de distribution d'air (8) sont conçus au niveau de deux faces plates (9, 10) opposées l'une à l'autre de l'élément de distribution d'air (7) à proximité de la surface périphérique (11).

6. Instrument de traitement médical, en particulier dentaire, lequel est conçu pour distribuer un milieu d'écoulement abrasif, avec
- une pièce à main,
- un réservoir de stockage (1) pour un agent de traitement abrasif disposé au niveau de la pièce à main,
- une conduite d'amenée (2) pour de l'air comprimé, laquelle débouche dans le réservoir de stockage (1), et
- une conduite d'évacuation (4) s'étendant du réservoir de stockage (1) à un orifice de sortie pour le milieu d'écoulement abrasif,
dans lequel des moyens de guidage d'air (6) sont disposés dans la zone d'extrémité (5) de la conduite d'amenée (2), lesquels sont conçus pour distribuer l'air comprimé dans une zone inférieure du réservoir de stockage (1) dans celui-ci sensiblement indépendamment de l'orientation de la pièce à main,
dans lequel les moyens de guidage d'air (6) comprennent au moins deux conduites de distribution d'air (12, 13), lesquelles débouchent dans différentes zones dans le réservoir de stockage (1),
**caractérisé en ce**
**qu'**un ensemble soupape (14) est en outre prévu, lequel relie la conduite d'amenée (2) à l'une des conduites de distribution d'air (12, 13) en fonction de l'orientation de la pièce à main.

7. Instrument de traitement médical selon la revendication 6,
**caractérisé en ce**
**que** l'ensemble soupape (14) est relié en position fixe à la pièce à main.

8. Instrument de traitement médical selon la revendication 6 ou 7,
**caractérisé en ce**
**que** le réservoir de stockage (1) s'étend le long d'un axe longitudinal (L) qui est orienté par exemple parallèlement à un axe longitudinal de la pièce à main, dans lequel le réservoir de stockage (1) présente une zone de paroi intérieure (20) en particulier cylindrique circulaire, par laquelle une délimitation d'un espace intérieur (21) du réservoir de stockage (1) pour loger l'agent de traitement est formée, dans lequel un centre (M) de l'espace intérieur (21) se situe sur l'axe longitudinal (L).

9. Instrument de traitement médical selon la revendication 8,
**caractérisé en ce**
**que** les deux conduites de distribution d'air (12, 13) débouchent dans deux zones différentes dans le réservoir de stockage (1), qui se trouvent au niveau de deux positions longitudinales (L1, L2) différentes par rapport à l'axe longitudinal (L), qui ne sont pas identiques au centre (M).

10. Instrument de traitement médical selon l'une quelconque des revendications 6 à 9,
**caractérisé en ce**
**que** l'ensemble soupape (14) présente un canal distributeur (15) accouplé à la conduite d'amenée (2), qui est accouplé aux conduites de distribution d'air (12, 13), dans lequel un élément de soupape (16) est disposé dans le canal distributeur (15).

11. Instrument de traitement médical selon la revendication 10 dans son rattachement à la revendication 8,
**caractérisé en ce**
**que** le canal distributeur (15) est disposé au niveau de la pièce à main, de telle sorte qu'il est orienté au moins en première approximation avec son étendue longitudinale parallèle à l'axe longitudinal (L) du réservoir de stockage (1).

12. Instrument de traitement médical selon la revendication 10 ou 11,
**caractérisé en ce**
**que** le canal distributeur (15) présente une entrée (144) pour la conduite d'amenée (2) ainsi qu'une première sortie (141) qui est reliée à une première conduite de distribution d'air (12) des deux conduites de distribution d'air (12, 13) et une seconde sortie (142) qui est reliée à une seconde conduite de distribution d'air (13) des deux conduites de distribution d'air (12, 13).

13. Instrument de traitement médical selon la revendication 12,
**caractérisé en ce**
**que** l'entrée (144) se trouve dans une zone centrale du canal distributeur (15) et les deux sorties (141, 142) au niveau de deux zones d'extrémité opposées du canal distributeur (15).

14. Instrument de traitement médical selon l'une quelconque des revendications 10 à 13,
**caractérisé en ce**
**que** le canal distributeur (15) est réalisé de manière courbée et l'élément de soupape (16) est une sphère montée mobile dans le canal distributeur ou un rouleau ou un élément de rouleau.

15. Instrument de traitement médical selon la revendication 14,
**caractérisé en ce**
**que** le canal distributeur (15) est conçu de façon tubulaire, de sorte que l'élément de soupape (16) puisse se déplacer librement à l'intérieur du canal distributeur (15).
